# EUROPÄISCHE PATENTANMELDUNG

(11) **EP 0 793 047 A1**
(43) Veröffentlichungstag der Anmeldung: **03.09.1997**
(21) Anmeldenummer: 96120323.9
(22) Anmeldetag: 18.12.1996
(51) Int. Cl.: F16L 33/207

(54) **Pressfitting zum Anschluss eines Rohres**

(30) Priorität: 29.02.1996 DE 19607630
(71) Anmelder: Hewing GmbH, D-48607 Ochtrup (DE)
(72) Erfinder: Riesselmann, Franz-Josef, 49393 Lohne (DE)
(74) Vertreter: Hilleringmann, Jochen, Dipl.-Ing.

(57) **Zusammenfassung**

Der Preßfitting zum Anschluß eines Rohres, insbesondere eines Kunststoffrohres oder Kunststoff/Metall/Kunststoff-Verbundrohres ist mit einem Anschlußkörper (12) versehen, der einen im wesentlichen zylindrischen Anschlußbereich (18) aufweist, auf den das Ende des anzuschließenden Rohres (39) aufschiebbar ist. Im Anschlußbereich (18) des Anschlußkörpers (12) ist mindestens eine Vertiefung (20) vorgesehen. Das ringförmige Abdichtelement (28) zum Abdichten des Anschlußkörpers (12) gegenüber dem Rohr (39) im Anschlußbereich (18) besteht aus einem vernetzten Polymermaterial, wobei das Abdichtelement (28) die mindestens eine Vertiefung (20) überdeckt. Zum radialen Verpressen des Rohrendes mit dem Anschlußbereich (18) des Anschlußkörpers (12) ist eine Preßhülse (42) vorgesehen.

## Beschreibung

Die Erfindung betrifft einen Preßfitting zum Anschluß eines Rohres, insbesondere eines Kunststoffrohres oder Kunststoff/Metall/Kunststoff-Verbundrohres, wie grundsätzlich aus WO 92/09840 und DE 43 25 349 A1 bekannt.

Derartige Preßfittinge sind in einer Vielzahl von Ausgestaltungen bekannt. Bei diesen Preßfittingen wird das anzuschließende Rohr auf den im wesentlichen zylindrischen Anschlußbereich eines Anschlußkörpers aufgeschoben und mittels einer Preßhülse radial gegen den Anschlußbereich des Anschlußkörpers gedrückt und verpreßt. Durch eine Profilierung des Anschlußbereichs und/oder durch andere Maßnahmen wird dafür gesorgt, daß sich das verpreßte Rohr nicht ungewollt vom Anschlußkörper lösen kann. Zur Abdichtung des Kunststoff- oder Verbundrohres gegenüber dem Anschlußkörper ist mindestens ein O-Ring aus elastischem Material vorgesehen, der in einer Aufnahmenut im Anschlußbereich des Anschlußkörpers untergebracht ist. Beim Aufschieben des anzuschließenden Rohrendes auf den Anschlußbereich des Anschlußkörpers kann es immer wieder vorkommen, daß der O-Ring aus seiner Aufnahmenut herausrutscht, womit es zu einer undichten Anlage des verpreßten Rohres am Anschlußkörper kommen kann. Ferner besteht die Gefahr, daß sich die Materialeigenschaften des O-Rings im Laufe der Zeit verändern, so daß es zu einer Undichtigkeit nach einer längeren Betriebsdauer kommen kann.

Der Erfindung liegt die Aufgabe zugrunde, einen Preßfitting zum Anschluß eines Kunststoffrohres oder eines Kunststoff/Metall/Kunststoff-Verbundrohres zu schaffen, der die dichte Anlage des Rohres an dem Fitting über die gesamte Lebensdauer des Anschlusses erlaubt.

Zur Lösung dieser Aufgabe wird mit der Erfindung ein Preßfitting der eingangs genannten Art vorgeschlagen, der versehen ist mit
- einem Anschlußkörper, der einen im wesentlichen zylindrischen Anschlußbereich aufweist, auf den das Ende des anzuschließenden Rohres aufschiebbar ist,
- mindestens einer Vertiefung im Anschlußbereich des Anschlußkörpers,
- einem ringförmigen Abdichtelement aus einem vernetztem Polymermaterial zum Abdichten des Anschlußkörpers gegenüber dem Rohr im Anschlußbereich,
- wobei das Abdichtelement die mindestens eine Vertiefung überdeckt, und
- einer Preßhülse zum radialen Verpressen des Rohrendes mit dem Anschlußbereich des Anschlußkörpers.

Bei dem erfindungsgemäßen Preßfitting wird zur Abdichtung des Rohres gegenüber dem Anschlußbereich ein ringförmiges Abdichtelement aus einem vernetzten Polymermaterial, insbesondere aus vernetztem Polyethylen verwendet. Damit einerseits das Rohr nach der Verpressung dicht an dem Abdichtelement und dieses wiederum dicht im Anschlußbereich des Anschlußkörpers anliegt, befindet sich unterhalb des Dichtelements mindestens eine Vertiefung, in die das Material des Dichtelements beim Verpressen unter entsprechender Verformung des Rohres hineingedrückt wird. Das Eindrücken des Abdichtelements in diese Vertiefung und das Eindrücken des Rohres in die sich in dem Abdichtelement ergebende Vertiefung sorgt zusätzlich für eine Zugentlastung und einen axialen Halt des Rohres im Anschlußbereich des Anschlußkörpers. Zusätzlich können zu der mindestens einen von dem Abdichtelement überdeckten Vertiefung auch mindestens eine freiliegende Vertiefung vorgesehen sein, in die dann beim Verpressen das Rohr unmittelbar hineingedrückt wird. Bei den Vertiefungen handelt es sich vorzugsweise um umlaufende Vertiefungen in Form von Nuten o. dgl. Aber auch allseits begrenzte Vertiefungen, die über den Umfang des Anschlußbereichs verteilt angeordnet sind, sind denkbar.

Aus der Verwendung von Kunststoffmaterial für fluidführende Rohre insbesondere im Heizungs- und Sanitärbereich sind das Langzeitverhalten und die Eigenschaften von Kunststoffmaterialien hinlänglich bekannt. Heutzutage haben sich vernetzte Polymermaterialien als Materialien für Kunststoffrohre durchgesetzt. Da das Abdichtelement des erfindungsgemäßen Preßfittings aus einem derartigen vernetzten Polymermaterial besteht, weiß man, daß die Eigenschaften des Abdichtelements sich über den gesamten Einsatzbereich des Preßfittings nicht verändern, mithin also gleich bleiben. Damit ist ein ganz wesentlicher Schritt in Richtung Langzeitabsicherung von Preßverbindungen zwischen Kunststoff- bzw. Verbundrohren und (Metall-)Anschlußkörpern getan.

In vorteilhafter Weiterbildung der Erfindung ist vorgesehen, daß das ringförmige Abdichtelement als Hülse ausgebildet ist, die eine gewisse Wandstärke aufweist. Diese Hülse ist vorzugsweise in einer außen in dem Anschlußbereich ausgebildeten Aussparung untergebracht, so daß die zylindrische Außenseite der Hülse mit dem übrigen Teil des Anschlußbereichs fluchtet. Die Tiefe der Aussparung ist also im wesentlichen gleich der Wandstärke der Hülse. Innerhalb der Aussparung befindet sich dann die mindestens eine Vertiefung, in die beim Verpressen Material des Abdichtelements hineingedrückt wird.

Vorteilhafterweise ist das ringförmige Abdichtelement mit einem ringförmigen, axial ausgerichteten Ringraum zur Aufnahme des anzuschließenden Rohrendes versehen. Das Abdichtelement gemäß dieser Weiterbildung umfaßt also das anzuschließende Rohrende von innen, von außen und stirnseitig. Mit anderen Worten ist das ringförmige Abdichtelement im Querschnitt im wesentlichen U-förmig ausgebildet und mit einer die mindestens eine Vertiefung überdeckenden zylindrischen Innenwand, einer radialen, rechtwinklig zur Innenwand verlaufenden Stirnwand und einer zur Innenwand parallelen zylindrischen Außenwand versehen. Der Abstand zwischen den parallelen konzentrischen Wänden (Innenwand und Außenwand) dieses Abdichtelements ist im wesentlichen gleich der Wanddicke des anzuschließenden Rohres. Beim Verpressen wird also Material des Abdichtelements über die Preßhülse von außen gegen das anzuschließende Rohr gedrückt, das seinerseits über seine Innenseite Material des Abdichtelements der Innenwand in die mindestens eine Vertiefung hineindrückt. Es entsteht auf diese Weise eine mit sehr hoher Wahrscheinlichkeit nach dem Verpreßvorgang dichte Verbindung zwischen dem Kunststoffrohr/Verbundrohr und dem (Metall-)Anschlußkörper. Die Anlageflächen von Abdichtelement und Rohr sind labyrinthartig, was die Dichtigkeit erhöht.

Das zuvor beschriebene Abdichtelement befindet sich zweckmäßigerweise in einer Aussparung im Anschlußbereich des Anschlußkörpers, wobei diese Aussparung eine Tiefe aufweist, die im wesentlichen gleich der Dicke der Innenwand des Abdichtelements ist. Diese Aussparung umfaßt auch die mindestens eine Vertiefung, die von dem Abdichtelement überdeckt ist.

Das zuvor beschriebene Abdichtelement befindet sich zweckmäßigerweise zum Teil in einem Ringraum, der zwischen dem Anschlußbereich und einem konzentrisch dazu angeordneten, einstückig mit dem Anschlußkörper ausgebildeten Kragen, der die Außenwand des Abdichtelements ausgehend von dessen Stirnwand teilweise, d.h. teilweise in axialer Erstreckung des Abdichtelements umschließt.

Die Ausbildung des Abdichtelements mit einem Ringraum zur Aufnahme des anzuschließenden Rohrendes bietet desweiteren die Möglichkeit, die Preßhülse im unverpreßten Zustand gegen unbeabsichtigtes Ablösen gesichert am Abdichtelement und damit am Preßfitting zu halten. Dazu weist die Preßhülse zwei bezüglich ihrer Durchmesser unterschiedliche Axialabschnitte auf. Der im Durchmesser größere Axialabschnitt umgibt dabei die Außenwand des Abdichtelements, mit dem die Preßhülse klemmend oder auf sonstige Weise verbunden ist. Der im Durchmesser kleinere Axialabschnitt schließt sich dann an den das Abdichtelement umgebenden Axialabschnitt an, wobei die Innenseite dieses Axialabschnitts der Preßhülse mit der Innenseite der Außenwand des Abdichtelements im wesentlichen fluchtet. Anders ausgedrückt ist die Durchmesserdifferenz der beiden Axialabschnitte im wesentlichen gleich der Dicke der Außenwand des Abdichtelements in demjenigen Bereich, in dem die Preßhülse das Abdichtelement umgibt. Vorzugsweise ist die Außenwand des Abdichtelements in diesem Bereich gegenüber dem übrigen Außenwandbereich verdickt.

Nachfolgend wird anhand der Figuren ein Ausführungsbeispiel der Erfindung näher erläutert. Im einzelnen zeigen:
- Fig. 1: im Halblängsschnitt den Preßverbinder mit Abdichtelement und an diesem klemmend gehaltener Preßhülse im Zustand vor einer Verpressung, wobei das anzuschließende Rohrende gestrichelt dargestellt ist, und
- Fig. 2: im Halblängsschnitt den Preßfitting gemäß Fig. 1 im verpreßten Zustand, wobei auch hier das anzuschließende Rohr strichpunktiert dargestellt ist.

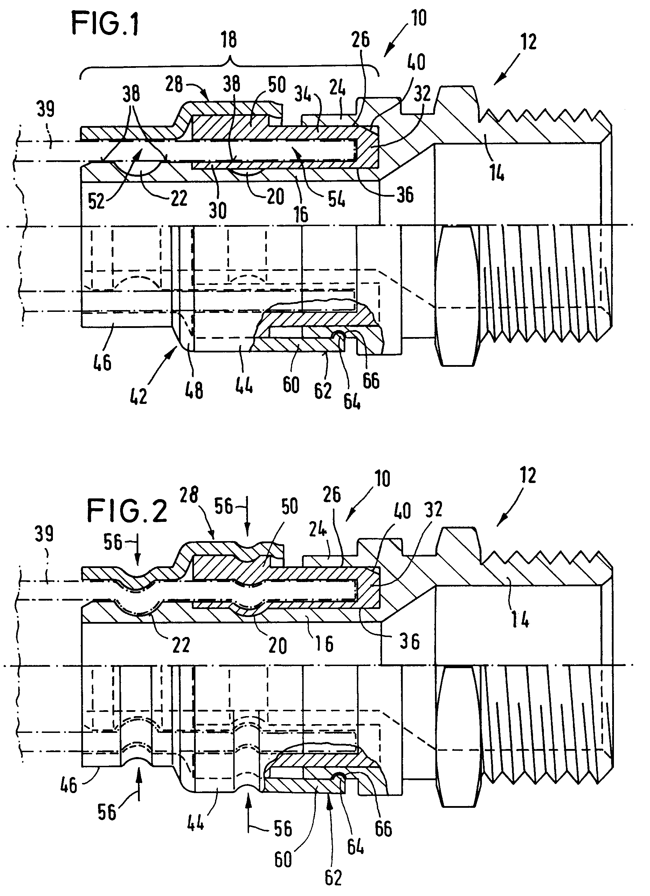

In den Fign. 1 und 2 ist ein Preßfitting 10 im unverpreßten Zustand und im verpreßten Zustand jeweils im Halblängsschnitt dargestellt. Der Preßfitting 10 weist einen Anschlußkörper 12 aus Metall auf, der einen im wesentlichen zylindrischen Abschnitt 14 aufweist, von dem eine Stützhülse 16 koaxial absteht, die den Anschlußbereich 18 des Anschlußkörpers 12 definiert. Die Stützhülse 16 ist zylindrisch und weist eine erste umlaufende Vertiefung 20 sowie eine zweite umlaufende Vertiefung 22 auf, die einen größeren axialen Abstand zum zylindrischen Abschnitt 14 des Anschlußkörpers 12 als die erste Vertiefung 20 aufweist. Einstückig mit dem zylindrischen Abschnitt 14 des Anschlußkörpers 12 verbunden ist ein Kragen 24, der die Stützhülse 16 konzentrisch umgibt, gegenüber der Stützhülse 16 aber eine wesentlich geringere axiale Erstreckung aufweist. Der sich auf diese Weise zwischen der Stützhülse 16 und dem Kragen 24 bildende Ringraum 26 des Anschlußkörpers 12 nimmt ein ringförmiges Abdichtelement 28 aus vernetztem Polyethylen (PEX) auf. Das PEX-Abdichtelement 28 weist im Querschnitt betrachtet U-Form auf und besteht aus einer zylindrischen Innenwand 30, an die sich eine radiale Stirnwand 32 anschließt. Die radiale Stirnwand 32 ist ferner mit einer zylindrischen Außenwand 34 des Abdichtelements 28 verbunden. Die beiden zylindrischen Wände bilden die Schenkel und die Stirnwand bildet die Basis der oben angesprochenen U-Form. Bei dem Abdichtelement 28 handelt es sich um ein einstückiges Teil.

In der Außenfläche der Stützhülse 16 ist eine Aussparung 36 eingearbeitet, in der die erste Vertiefung 22 angeordnet ist. Die radiale Erstreckung (Tiefe) der Aussparung 36 ist gleich der Dicke der Innenwand 30 des Abdichtelements 28 gewählt. Wie anhand der Figuren zu erkennen ist, ergibt sich infolge der Aussparung 36 im Anschlußbereich 18 eine im wesentlichen zylindrische Anlagefläche, an der das bei 38 strichpunktiert angedeutete Rohr 39, bei dem es sich um ein Kunststoffrohr oder um ein Kunststoff/Metall/Kunststoff-Verbundrohr handelt, anliegt.

Infolge seiner Elastizität läßt sich das Abdichtelement 28, dessen Innendurchmesser um die Tiefe der Aussparung 36 geringer ist als der Außendurchmesser der Stützhülse 16 an deren dem Kragen 24 abgewandten freien Ende, über dieses freie Ende hinweg in die Aussparung 36 hinein einpassen. Zur Erleichterung dieses Einsatzvorgangs ist das Abdichtelement 28 an der Außenseite des Übergangsbereichs zwischen Stirnwand 32 und zylindrischer Außenwand 34 abgeschrägt, was bei 40 dargestellt ist.

Zum Verpressen des Rohres 39 radial gegen die Stützhülse 16 dient eine (Metall-)Preßhülse 42, die aus einem ersten und einem zweiten Axialabschnitt 44 bzw. 46 mit einem diese beiden Abschnitte verbindenden Übergangsbereich 48 besteht. In ihrem ersten Axialabschnitt 44 umgreift die Preßhülse 42 die Außenwand 34 des Abdichtelements 28, und zwar im der Stirnwand 32 abgewandten Endabschnitt der Außenwand 34. Der erste Axialabschnitt 44 ist um die Dicke der Außenwand 34 in demjenigen Bereich, in dem diese von der Preßhülse 42 umgeben ist, größer als der Durchmesser des zweiten Axialabschnitts 46 der Preßhülse 42. Wie in den Figuren bei 50 gezeigt, weist die Außenwand 34 in ihrem der Stirnwand 32 abgewandten freien, vom ersten Axialabschnitt 44 der Preßhülse 42 umgebenen Endbereich eine größere Dicke als im übrigen Bereich auf. Der erste Axialabschnitt 44 der Preßhülse 42 steht geringfügig über das dem Kragen 24 des Anschlußkörpers 12 zugewandte Ende des verdickten Bereichs 50 der Außenwand 34 des Abdichtelements 28 über und weist in diesem Bereich eine Einschnürung auf. Auf diese Weise ist die Preßhülse 42 auch im unverpreßten Zustand unverlierbar bzw. gegen unbeabsichtigtes Ablösen an dem Abdichtelement 28 gehalten. Da das Abdichtelement 28 infolge seiner in der Aussparung 36 der Stützhülse 16 befindlichen Innenwand 30 selbst unverlierbar am Anschlußkörper 12 gehalten ist, bilden Preßhülse 42 und Anschlußkörper 12 (vermittels des Abdichtelements 28) eine Einheit.

Wie in den Figuren angedeutet, wird das anzuschließende Rohr 39 in einen Ringraum eingeführt, der sich aus einem ersten Teilraum 52 und einem zweiten Teilraum 54 zusammensetzt. Der erste Teilraum 52 wird vom zweiten Axialabschnitt 46 der Preßhülse 42 und der Stützhülse 16 gebildet; im Bereich dieses ersten Teilraums 52 befindet sich die zweite Vertiefung 22 des Anschlußbereichs 18 der Stützhülse 16. Der zweite Teilraum 54 wird von dem durch die U-Form des Abdichtelements 28 bedingten Ringraum gebildet. Im Bereich dieses zweiten Teilraums 54 befindet sich in dem Anschlußbereich 18 der Stützhülse 16 die erste Vertiefung 20, die von der Innenwand 30 des Abdichtelements 28 überdeckt ist.

In Fig. 2 ist durch die Pfeile 56 angedeutet, in welchen Bereichen mittels eines hier nicht dargestellten Preßwerkzeuges Ringverpressungen der Preßhülse 42 vorgenommen werden. Diese Ringverpressungen liegen den Vertiefungen 20 und 22 gegenüber. Dadurch kommt es zu einem Eindrücken des Materials der Innenwand 30 des Abdichtelements 28 in die erste Vertiefung 20 und des Materials des Rohres 39 in die zweite Vertiefung 22. Die durch die Größe und Ausgestaltung der Vertiefungen 20 und 22 bedingten Verformungen der Innenwand 30 des Abdichtelements 28 bzw. des Rohres 39 setzen sich in der Preßhülse 42 und in der Außenwand 34 des Abdichtelements 28 fort. An dieser Stelle sei angemerkt, daß andere Vertiefungsformen als die hier dargestellten möglich sind, um für den axialen Halt des Rohres 39 am Anschlußkörper 12 im verpreßten Zustand zu sorgen.

Um die Preßhülse 42 axial am Anschlußkörper 12 des Fittings 10 zu sichern, kann zusätzlich oder alternativ zur oben erwähnten Sicherung der Preßhülse 42 am Abdichtelement 28 eine Verriegelung der Preßhülse 42 direkt am Anschlußkörper 12 vorgesehen sein. Hierzu wird die Preßhülse 42 verlängert (siehe Bezugszeichen 60), um von außen den Kragen 24 zu umfassen. In diesem Überlappungsbereich 62 ist an der Innenseite der Preßhülse 42 (und/oder an der Außenseite des Kragens 24) ein Vorsprung 64 ausgebildet, der in eine korrespondierende Vertiefung 66 in der Außenseite des Kragens 24 (und/oder der Innenseite der Preßhülse 42) eingreift. Der Vorsprung bzw. die Vorsprünge kann/können durch Verpressung erzeugt und in den/die korrespondierende/korrespondierenden Vertiefung/Vertiefungen eingebracht sein. Die hier erwähnte mechanische Verriegelung ist in den Fign. 1 und 2 jeweils unten angedeutet.

## Patentansprüche

1. Preßfitting zum Anschluß eines Rohres, insbesondere eines Kunststoffrohres oder Kunststoff/Metall/Kunststoff-Verbundrohres, mit
- einem Anschlußkörper (12), der einen im wesentlichen zylindrischen Anschlußbereich (18) aufweist, auf den das Ende des anzuschließenden Rohres (39) aufschiebbar ist,
- mindestens einer Vertiefung (20) im Anschlußbereich (18) des Anschlußkörpers (12),
- einem ringförmigen Abdichtelement (28) aus einem vernetzten Polymermaterial zum Abdichten des Anschlußkörpers (12) gegenüber dem Rohr (39) im Anschlußbereich (18),
- wobei das Abdichtelement (28) die mindestens eine Vertiefung (20) überdeckt, und
- einer Preßhülse (42) zum radialen Verpressen des Rohrendes mit dem Anschlußbereich (18) des Anschlußkörpers (12).

2. Preßfitting nach Anspruch 1, dadurch gekennzeichnet, daß das ringförmige Abdichtelement (28) eine Hülse ist.

3. Preßfitting nach Anspruch 1, dadurch gekennzeichnet, daß das ringförmige Abdichtelement (28) einen im wesentlichen U-förmigen Querschnitt mit einer die mindestens eine Vertiefung (20) überdeckenden zylindrischen Innenwand (30), einer radialen Stirnwand (32) und einer zur Innenwand (30) parallelen zylindrischen Außenwand (34) versehen, wobei der Abstand zwischen der Innenwand (30) und der Außenwand (34) im wesentlichen gleich der Wanddicke des anzuschließenden Rohres (39) ist und zur Aufnahme von dessen Ende vorgesehen ist.

4. Preßfitting nach Anspruch 2 oder 3, dadurch gekennzeichnet, daß das Abdichtelement (28) in eine die mindestens eine Vertiefung (20) umfassende Aussparung (36) im Anschlußbereich (18) des Anschlußkörpers (12) eingesetzt ist, wobei die Aussparung (36) eine Tiefe aufweist, die im wesentlichen gleich der Dicke der Wand der Hülse bzw. der Innenwand (30) des Abdichtelements (28) ist.

5. Preßfitting nach Anspruch 3 oder 4, dadurch gekennzeichnet, daß der Anschlußkörper (12) einen zum Anschlußbereich (18) konzentrischen Kragen (24) aufweist, der die Außenwand (34) des Abdichtelements (28) ausgehend von dessen Stirnwand (32) teilweise umschließt.

6. Preßfitting nach einem der Ansprüche 3 bis 5, dadurch gekennzeichnet, daß die Preßhülse (42) einen ersten und einen zweiten Axialabschnitt (44,46) aufweist, wobei der erste Axialabschnitt (44) einen im wesentlichen um die Wanddicke des anzuschließenden Rohres (39) größeren Innendurchmesser als der zweite Axialabschnitt (46) aufweist, und daß der zweite Axialabschnitt (46) der Preßhülse (42) die Außenwand (34) des Abdichtelements (28) an dessen der Stirnwand (32) teilweise abgewandten Ende gegen unbeabsichtigtes Ablösen gesichert umgibt.

7. Preßfitting nach Anspruch 6, dadurch gekennzeichnet, daß die Außenwand (34) des Abdichtelements (28) in demjenigen Bereich, in dem sie von dem ersten Abschnitt (44) der Preßhülse (42) umgeben ist, eine infolge eines Außenvorsprungs (50) vergrößerte Dicke aufweist.

8. Preßfitting nach einem der Ansprüche 1 bis 7, dadurch gekennzeichnet, daß das Polymermaterial Polyethylen ist.

9. Preßfitting nach Anspruch 5 oder einem der Ansprüche 6 bis 8, sofern dieser auf Anspruch 5 rückbezogen ist, dadurch gekennzeichnet, daß die Preßhülse (42) den Kragen (24) von außen umgibt und mit diesem verrastet ist.
